# EUROPÄISCHE PATENTANMELDUNG

(11) **EP 1 267 228 A2**
(43) Veröffentlichungstag der Anmeldung: **18.12.2002**
(21) Anmeldenummer: 02012151.3
(22) Anmeldetag: 01.06.2002
(51) Int. Cl.: G05B 13/02

(54) **Verfahren und Schaltungsanordnung zur Regelung von Extremwerten**

(30) Priorität: 11.06.2001 DE 10127878
(71) Anmelder: Forschungszentrum Rossendorf e.V., 01328 Dresden (DE)
(72) Erfinder: Herbrand, Frank, 01139 Dresden (DE)

(57) **Zusammenfassung**

Der Erfindung liegt die Aufgabe zugrunde, ein Verfahren und eine Schaltungsanordnung vorzuschlagen, mit denen der Extremwert einer Größe, oft als Gütegröße bezeichnet, auch bei sehr kleinen Stellbewegungen zu finden und zu halten ist und bei denen der Suchverlust durch die Suchbewegungen konstant gehalten werden kann. Das Verfahren beinhaltet, dass zufällige oder pseudozufällige binäre Testsignale verwendet werden, dass die Bewegung der Stellsignale mit den Änderungen eines Gütewertes durch Polaritätskorrelationen korreliert werden, dass die Testsignalamplituden auf einen vorgebbaren Wert geregelt werden und dass die Integrationszeitkonstanten für die Integration der Ergebnisse der Polaritätskorrelationen adaptiert werden.

Die Schaltungsanordnung beinhaltet, dass ein Testsignalgenerator (1.1) mit einer Testsignalamplitudenregelung verbunden (2.1) ist, dessen Ausgang über einen Summationsglied (3.1) auf einen Eingang des zu optimierenden Systems (4) geführt ist, dessen Ausgang über einen Differenzbildner (5A) mit einem Korrelationsoperator (6) verbunden ist, wobei der Ausgang des Summationsgliedes (3.1) mit einem weiteren Differenzenbildner (5B.1) verbunden ist, der Ausgang dieses Differenzenbildners mit dem der Stellgröße zugeordneten Korrelationsoperator (6.1) verbunden ist, der Ausgang des Korrelationsoperators über den Integrator (7.1) mit dem Verknüpfungspunkt verbunden ist und der Ausgang des Korrelationsoperators über ein Adaptionsglied (8.1) auf den zweiten Eingang des Integrators geführt ist.

## Beschreibung

Die Erfindung betrifft ein Verfahren und eine Schaltungsanordnung zur Regelung von Extremwerten, mit dem sowohl das Auffinden eines Extremwertes als auch das Halten dieses Extremwertes und damit die Optimierung von Stellwerten an technischen Anlagen ermöglicht wird.
Eine spezielle Anwendung ist in Beschleunigeranlagen gegeben. Die Extremwertregelung ist bei dieser Anwendung inhaltlich gleichzusetzen mit dem Begriff der Optimierung, der Schwerpunkt liegt hierbei allerdings nicht nur im Auffinden des Extremwertes, sondern auch im Halten dieses Wertes unter dem Einfluß von Drifterscheinungen oder Störungen.

Es ist bereits ein Extremwertregelungsverfahren bekannt, das mit periodischen Testsignalen arbeitet (Schulze, K.-P. und Rehberg, K.-J.: Entwurf von adaptiven Systemen, Eine Darstellung für Ingenieure, Verlag Technik, Berlin 1988, Seite 149).
Dieses Extremwertregelungsverfahren hat jedoch bei seiner Anwendung an technischen Anlagen den Nachteil, dass der Suchverlust abhängig von der Steilheit der Gütefunktion in der Umgebung des Optimums ist. Er läßt sich deshalb nicht konstant halten.
Weiterhin stellt das Stellsignal mit seinen Arbeitsbewegung eine Störgröße bei der Korrelationsoperation dar. Außerdem wirkt sich ungünstig aus, dass die Optimierungsgeschwindigkeit abhängig von der Einstellung der Testsignalamplitude und insbesondere von der Steilheit um das Optimalgebiet ist.

Der Erfindung liegt die Aufgabe zugrunde, ein Verfahren und eine Schaltungsanordnung vorzuschlagen, mit denen der Extremwert einer Größe, oft als Gütegröße bezeichnet, auch bei sehr kleinen Stellbewegungen zu finden und zu halten ist und bei denen der Suchverlust durch die Suchbewegungen konstant gehalten werden kann.

Erfindungsgemäß wird die Aufgabe mit den in den Patentansprüchen dargelegten Merkmalen gelöst.

Die Erfindungen werden nachstehend an je einem Ausführungsbeispiel für das Verfahren und die Schaltungsanordnung näher erläutert.
Die zugehörige Zeichnung zeigt das Blockschaltbild der Schaltungsanordnung für die Verarbeitung zweier Stellgrößen.

### 1. Das Verfahren

Das Wesentliche des Verfahrens, das Auffinden und das Halten eines Extremwertes, vorzugsweise eines technischen Systems, wird wie folgt realisiert:
Für jede Stellgröße wird ein Testsignal, vorzugsweise ein binäres Pseudozufallssignal, benötigt. Die Testsignale der einzelnen Stellgrößen dürfen untereinander nicht korreliert sein. Die Amplitude dieses Testsignals wird so geregelt, dass die resultierenden Schwankungen des Gütesignals eine bestimmte Amplitude einhalten. Das so geregelte Testsignal wird mit dem derzeitigen Arbeitspunkt der Stellgröße addiert und stellt eine Stellgröße des Systems dar, dessen Extremwert gesucht und gehalten werden soll.
Vom daraus resultierenden Gütesignal werden die Differenzen zwischen den einzelnen Abtastschritten gebildet. Ebenso werden die Differenzen der Stellgröße zwischen diesen Abtastschritten gebildet. Diese Differenzen werden mit einem Korrelationsoperator, vorzugsweise mit einem Polaritätskorrelator, verknüpft. Das Ergebnis dieser Korrelationsoperation sei Null, wenn keine Korrelation vorliegt, und Eins, wenn eine Korrelation nachgewiesen werden kann. Das Ergebnis dieser Korrelation wird integriert. Das Ausgangssignal des Integrators stellt den neuen Arbeitspunkt der betrachteten Stellgröße dar. Mit diesem Verfahren läuft der Stellwert automatisch in den Punkt, bei dem das Gütesignal ein Maximum annimmt.
Die Integrationszeitkonstante wird zwischen zwei vorgegebenen Grenzwerten adaptiert. Dazu wird das Ausgangssignal des Korrelationsoperators verwendet. Wenn der Betrag dieses Ausgangswertes im Mittel Null ist, wird der größere Grenzwert der Integrationszeitkonstante im Integrator verwendet. Ist der Betrag des Ausgangswertes des Korrelationsoperators im Mittel Eins wird der kleinere Grenzwert der Integrationszeitkonstante verwendet. Dazwischen wird die Integrationszeitkonstante interpoliert. Dies führt zu kürzeren Suchzeiten, wenn sich die Stellgröße kontinuierlich in Richtung des Maximums der Gütegröße bewegt.
Dieses Verfahren kann für ein System mit mehreren Stellgrößen angewendet werden. Die Verfahrensschritte werden dabei gleichzeitig für alle Stellgrößen ausgeführt, lediglich die Verfahrensschritte der Testsignalamplitudenregelung werden für jede Stellgröße einzeln und nacheinander ausgeführt. Abweichend davon ist es auch möglich, alle Verfahrensschritte der einzelnen Stellgrößen nacheinander auszuführen.

### 2. Die Schaltungsanordnung

Mit der erfindungsgemäßen Schaltungsanordnung kann das vorbeschriebene Verfahren ausgeführt werden. Es ist möglich, die Extremwertregelung an Systemen mit einer oder mit mehreren Stellgrößen zu benutzen. Hier ist eine Schaltungsanordnung mit zwei Stellgrößen dargestellt. Die weitere Beschreibung bezieht sich dabei nur auf die Blöcke für die Stellgröße y₁. Die Blöcke und die Signale sind entsprechend mit dem Index 1 versehen. Für alle Stellgrößen gemeinsam ist das Gütesignal x und der Differenzenbildner 5a. Der Ausgang dieses Blockes stellt an allen Korrelationsoperatoren 6 eins der beiden Eingangssignale dar. Der Block 4 ist das mit dem Extremwertregler zu optimierende System mit seinen Eingangsgrößen y (auch als Stellgrößen bezeichnet).
Ein Testsignalgenerator 1.1 ist mit einem Testsignalamplitudenregler 2.1 verbunden, dessen Ausgang über ein Summationsglied 3.1 auf einen Eingang des zu optimierenden Systems 4 geführt ist. Dessen Ausgang ist über einen Differenzbildner 5a mit mehreren parallel angeordneten Korrelationsoperatoren 6, für jede Stellgröße einen, verbunden. Gleichzeitig ist der Ausgang des Summationsglieds 3.1 mit einem weiteren Differenzenbilder 5b.1 verbunden. Der Ausgang dieses Differenzenbildners ist mit dem der Stellgröße zugeordneten Korrelationsoperator 6.1 verbunden. Der Ausgang des Korrelationsoperators ist über den Integrator 7.1 auf das Summationsglied 3.1 geführt. Der Ausgang des Korrelationsoperators 6.1 ist außerdem über ein Adaptionsglied 8.1 auf den zweiten Eingang des Integrators 7.1 geführt und steuert die Integrationszeitkonstante des Integrators 7.1. Das zu optimierende System 4 kann über eine Mehrzahl von Eingängen verfügen. Im Bild ist der Spezialfall mit zwei Stellgrößen dargestellt. Diese weiteren Kanäle werden in der gleicher Weise mit parallel liegenden Blöcken 1, 2, 3, 5b, 6, 7 und 8 aufgebaut.

Der Testsignalgenerator ist ein binärer Zufalls- oder Pseudozufallsgenerator mit den Ausgangsgrößen -1 und + 1. Der Verstärker 2 verstärkt das Eingangssignal um den Wert m. Die Größe m wird durch den Verstärker so geregelt, dass die zugehörige Wirkung des Stellwertes auf den Gütewert des Blocks 4 eine bestimmte vorgegebene Amplitude erreicht (Testsignalamplitudenregelung). Die Testsignalamplitudenregelung stellt dabei einen eigenständigen Regelkreis dar. Die Extremwertregelung und die Testsignalamplitudenregelung werden abwechselnd für eine bestimmte Zeitdauer oder Schrittzahl am zu optimierenden System 4 ausgeführt, wobei die Extremwertregelung für alle Stellgrößen y gleichzeitig erfolgen kann. Die Testsignalamplitudenregelung wird statt dessen immer für alle Stellgrößen nacheinander ausgeführt.
Im Summationsglied 3.1 wird der Stellwertarbeitspunkt y_{1 0} mit dem zugehörigen Testsignal n₁ der Amplitude m₁ addiert und das Ergebnis ist der Stellwert y₁, einer der Stellgrößen des zu optimierenden Systems 4.
In den Blöcken 5a und 5b wird jeweils die Differenz zwischen der Eingangsgröße des laufenden Extremwertregelungsschritt und dem vorangegangenen Extremwertregelungsschritt gebildet und ausgegeben.
Für jede Stellgröße existiert ein Korrelationsoperator 6. In ihm wird die Korrelation zwischen der Änderung des Gütesignals x und der Änderung des jeweiligen Stellwertes y hergestellt. Es wird ein Polaritätskorrelator verwendet. Das Ausgangssignal dieses Polaritätskorrelators kann die Werte +1 (gleiche Vorzeichen), 0 (eine oder beide Eingangsgrößen gleich Null) und -1 (ungleiche Vorzeichen) annehmen.
Block 7.1 ist ein Integrator mit der Zeitkonstante T₁.

Die Wirkungsweise der Schaltungsanordnung im speziellen Fall für die Stellgröße y₁ ist folgende:

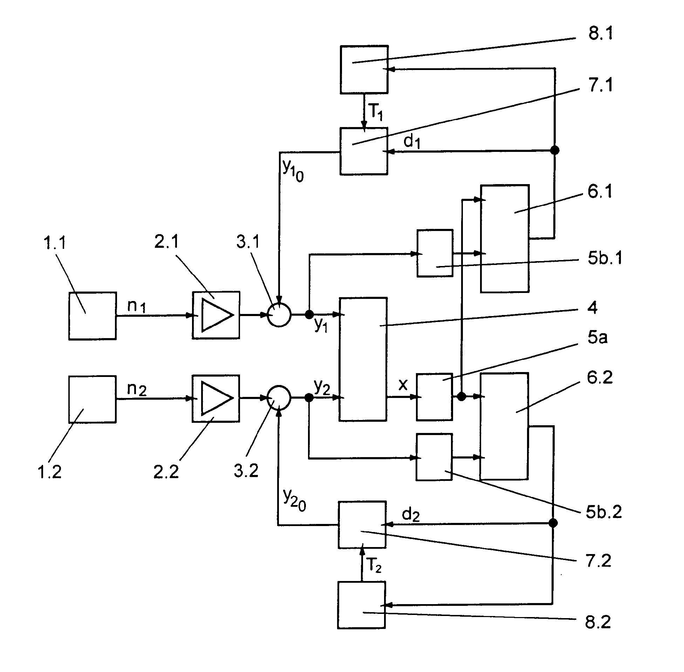

Der Stellwertarbeitspunkt y_{1 0} wird mit dem binären Testsignal der Amplitude m₁ beaufschlagt, die im Testsignalamplitudenregler 2.1 geregelt wird. Damit werden sogenannte Suchschritte mit der Stellgröße y₁ ausgeführt. Die Richtungen dieser Suchschritte werden mit den dabei auftretenden Differenzen des Gütewertes im Polaritätskorrelator 6.1 korreliert. Liegt der Stellwertarbeitspunkt auf einem ansteigenden Ast des Gütesignals ist die Polarität des Korrelationsergebnisses d₁ gleich der Richtung des Anstiegs der Gütekennlinie. Wird davon ausgegangen, dass die Gütekennlinie linksseitig vom Extremwert echt monoton wachsend und rechtsseitig vom Extremwert echt monoton fallend ist, dann ist bei einem Arbeitspunkt linksseitig vom Extremwert das Signals d₁ immer gleich +1 und bei einem Arbeitspunkt rechtsseitig vom Extremwert das Signal d₁ immer gleich -1. Wird nun das Signal d₁ im Integrator 7.1 integriert und das Integrationsergebnis als Stellwertarbeitspunkt y_{1 0} verwendet, führt dieses Verfahren dazu, dass der Stellwertarbeitspunkt y_{1 0} in den Extremwert der Gütekennlinie läuft. Liegt der Stellwert genau im Extremwert, dann ist das Signal d₁ gleich Null bzw. wechselt durch Störsignale gleichhäufig nach +1 und -1, wenn der Stellwert sehr dicht am Extremwert liegt.
Durch die Testsignalamplitudenregelung in Block 2.1 wird die Amplitude des Testsignals so geregelt, dass bei dem beschriebenen Vorgang der Suchverlust der Größe x bezüglich dieser Stellgröße y₁ einen bestimmten vorgebbaren Wert einhält. Über den Typ dieses Regelkreises werden keine weiteren Angaben gemacht. Verwendbar sind hierfür die üblichen bekannten Mittel der Regelungstechnik.
Da der Betrag der Größe d₁ genau 0 oder 1 ist, stellt die Zeitkonstante T₁ des Integrators 7.1 bei der Ausführung als zeit-diskretes System die Schrittweite der Arbeitsschritte dar. In einem zeit-kontinuierlichen System ist diese Zeitkonstante umgekehrt proportional der Optimierungsgeschwindigkeit. Diese Integrationszeitkonstante T₁ wird im Block 8.1 adaptiert, um einerseits eine höhere Suchgeschwindigkeit außerhalb des Optimums zu erhalten und zum anderen, um im Optimum eine möglichst große Stabilität gegenüber Störungen zu erhalten. Für diesen Zweck wird von den zwei Extremfällen ausgegangen, dass einerseits d₁ ständig -1 oder +1 ist und andererseits d₁ gleich häufig -1 oder +1 bzw. genau Null ist. Diese beiden Zustände werden durch eine gleitende Mittelwertbildung oder einem Tiefpassfilter getrennt und durch eine Betragsbildung gleichgerichtet. Hält damit über einen bestimmten Zeitraum der eben beschriebene Zustand an (nur +1 oder -1 bzw. wechselndes Vorzeichen und der Wert Null), erreicht der gleichgerichtete und gefilterte Wert den Wert 1 (eins der beiden Vorzeichen überwiegt stark) oder den Wert 0 (wechselndes Vorzeichen oder Null). In dem Fall, dass der gleichgerichtete Wert genau 1 ist, wird die Zeitkonstante T₁ auf einen Minimalwert gesetzt (hohe Optimierungsgeschwindigkeit). Im anderen Fall, dass der gleichgerichtete Wert Null ist, wird diese Zeitkonstante auf einen Maximalwert gesetzt (geringe Optimierungsgeschwindigkeit). Zwischen diesen beiden Extremfällen wird die Zeitkonstante interpoliert. Dazu kann z.B. eine lineare Interpolation verwendet werden.
Der bis hierher beschriebene Vorgang bewirkt eine Extremwertregelung einer einzelnen Stellgröße. Wird nun dieses Verfahren, wie in Bild 1 dargestellt, für jede Stellgröße einzeln, aber zeitlich gleichzeitig angewendet, wird die Extremwertregelung mehrdimensional ausgeführt. Nur der Gütewert x ist für alle eindimensionalen Optimierungen gleich. Alle anderen Werte werden für jede Stellgröße einzeln bestimmt. Damit sich hierbei die einzelnen eindimensionalen Optimierungen nicht bzw. nur gering gegenseitig beeinflussen, werden für die Testsignalgeneratoren 1 pseudozufällige binäre Signalgeneratoren angewendet. Gegenüber festen, aber unkorrelierten Frequenzen für die Testsignalgeneratoren werden dadurch nicht bestimmte Stellgrößen, nämlich die mit der höheren Testsignalfrequenz, bei der Optimierung bevorzugt. Die Such- und Optimierungsgeschwindigkeit ist deshalb über einen größeren Zeitraum betrachtet für alle Stellgrößen gleich.
Betrachtet man bei dieser mehrdimensionalen Suche eine einzelne Stellgröße, wirkt die gleichzeitige Extremwertregelung aller anderen Stellgrößen als Störquelle. Durch die Korrelationsoperation wird jedoch die Wirkung des Testsignals dieser Größe aus den Störungen herausgefiltert. Je mehr Stellgrößen gleichzeitig optimiert werden sollen, um so größer ist die Amplitude dieses Störsignals. Je mehr Stellgrößen also gleichzeitig optimiert werden, um so größer müssen die Zeitkonstanten der Integratoren 7 sein, um das Nutzsignal aus dem Signalgemisch herausfiltern zu können. Damit sinkt die Optimierungsgeschwindigkeit mit der Anzahl der zu optimierenden Stellgrößen.

Die Testsignalamplitude wird auf die Breite des Optimalgebietes geregelt. Damit bleiben die auftretenden Suchverluste konstant.
Da zur Korrelation nicht allein das Testsignal, sondern die Summe aus Testsignal und Stellwertarbeitspunkt verwendet wird, stellt die Arbeitsbewegung des Stellwertarbeitspunktes durch den Integrationsvorgang keine Störgröße mehr da, sondern wird in die Korrelation mit einbezogen.
Durch die Nutzung der Differenzenbildung mit den Blöcken 5 und der Polaritätskorrelation in den Blöcken 6 ist die Größe der Arbeitsschrittweite und damit die Suchgeschwindigkeit nicht mehr unmittelbar von der Testsignalamplitude und der 1. Ableitung der Gütekennlinie im Arbeitspunkt abhängig.

## Patentansprüche

1. Verfahren zur Regelung von Extremwerten an Systemen mit einer oder mehreren Stellgrößen, bei dem Testsignale und Korrelationsoperationen mit nachgeschalteten Integratoren eingesetzt werden und wobei die Information über eine vorliegende Korrelation zur Extremwertregelung verwendet werden, **dadurch gekennzeichnet, dass** zufällige oder pseudozufällige binäre Testsignale verwendet werden, dass die Bewegung der Stellsignale mit den Änderungen eines Gütewertes durch Polaritätskorrelationen korreliert werden, dass die Testsignalamplituden auf einen vorgebbaren Wert geregelt werden und dass die Integrationszeitkonstanten für die Integration der Ergebnisse der Polaritätskorrelationen adaptiert werden.

2. Schaltungsanordnung zur Regelung von Extremwerten an Systemen mit einer Stellgröße unter Verwendung eines Testsignalgenerators, eines Summationsglieds, Differenzenbildnern, eines Korrelationsoperators, eines Integrators und eines Adaptionsglieds am mit der Extremwertregelung zu optimierenden System (4), **dadurch gekennzeichnet, dass** ein Testsignalgenerator (1.1) mit einem Testsignalamplitudenregler (2.1) verbunden ist, dessen Ausgang über ein Summationsglied (3.1) auf einen Eingang des zu optimierenden Systems (4) geführt ist, dessen Ausgang über einen Differenzbildner (5a) mit einem Korrelationsoperator (6.1) verbunden ist, wobei der Ausgang des Summationsglieds (3.1) mit einem weiteren Differenzenbildner (5b.1) verbunden ist, der Ausgang dieses Differenzenbildners (5b.1) mit dem der Stellgröße zugeordneten Korrelationsoperator (6.1) verbunden ist, der Ausgang des Korrelationsoperators über den Integrator (7.1) mit dem Verknüpfungspunkt (3.1) verbunden ist und der Ausgang des Korrelationsoperators (6.1) über ein Adaptionsglied (8.1) auf den zweiten Eingang des Integrators (7.1) geführt ist.

3. Schaltungsanordnung zur Regelung von Extremwerten an Systemen mit mehreren Stellgrößen unter Verwendung der Schaltung nach Anspruch 2, **dadurch gekennzeichnet, dass** die Bauelemente Testsignalgenerator (1), Testsignalamplitudenregler (2), Summationsglied (3), Differenzenbildner (5a und 5b), Korrelationsoperator (6), Integrator (7) und Adaptionsglied (8) in der Anzahl der zu regelnden Stellgrößen parallel angeordnet sind, intern gemäß Anspruch 2 verschaltet und auf die Eingänge des zu optimieremden Systems (4) geführt sind.
